# EUROPEAN PATENT APPLICATION

(11) **EP 2 109 044 A1**
(43) Date of publication of application: **14.10.2009**
(21) Application number: 08290343.6
(22) Date of filing: 08.04.2008
(51) Int. Cl.: G06F 11/34, G06F 17/22, G06F 11/30

(54) **Method and associated method for log file management**

(71) Applicant: Alcatel Lucent, 75008 Paris (FR)
(72) Inventor: Van Ackere, Michel, 9100 Sint-Niklaas (BE); Weemaels, Pascal, 9820 Merelbeke (BE)
(74) Representative: BiiP cvba

(57) **Abstract**

The present invention relates to a method for managing a log file. The method comprises the use of at least one marker in the log file. The marker is a criterion for the retention of a log file entry or of a part of a log file entry.

## Description

### Field of the Invention

The present invention generally relates to management of log files and in particular to the clean-up of logging information and the reduction of storage space required for log files.

### Background of the Invention

Log files may contain information related to a wide range of events which can be valuable during research, development or the use of products such as communication equipment, online services, etc. For instance access logs can be valuable to determine who has accessed a particular product or service, when access was granted or refused, reasons for access approval or rejection, etc. Event logs can be used to track events in a system such as execution of algorithms or functions, generated error messages, etc. Log files are often also used in an environment which is not related to online services or communication equipment. For instance a door which can be opened with a key-card may keep a log file of key-cards used to open the door and a timestamp of such an event. In general log files store information which can be accessed to determine what has happened or when something has happened in a particular scenario.

The information contained in a log file is typically organized in log file entries, which may comprise multiple parts. For instance in an access log, each log file entry may relate to a single access attempt and each entry may comprise a timestamp, an identification of who performed the access attempt and an indication whether access was granted or refused. The more information that is stored in a single log file entry, the larger a log file will become in terms of storage space. This means that complex log files with large log file entries may take up a significant amount of storage space over time. In environments such as corporate server platforms where storage can be added at low cost, this is a minor problem. However in platforms which operate online where storage is limited or extending storage may add a significant cost it is desirable to limit the storage space required by log files.

A simple solution is to remove log files over time from the storage. Manual log file deletion is the easiest way of removing log files and reducing the storage requirements. However this requires human effort which has a price in terms of time investment and is error prone. Furthermore manual log file deletion does not scale well with an increasing number of log files to be stored. Manual log file deletion becomes even more difficult when only particular log file entries have to be removed from the system rather than entire log files. A human has to go through the entire log file, looking for specific entries which then can be removed from the log file. An alternative to manual removal is an automated system which removes the log files. For instance a server or piece of communication equipment may be able to automatically remove a log file which is older than a specific age. Such a solution can be implemented on most systems without a lot of effort and generally works without any problems. However the result is that a log file is removed and thus any information contained therein is lost permanently.

Log rotation systems can be used to reduce the number of log files over time while keeping certain log files available for a particular period of time. For instance the server or communication equipment may keep a log file for each day of the week and keep those files for a week. Thus the system has 7 log files and each day the log file for that day of the week is overwritten. The advantage of such a system is that all information is available for up to a week after the information was stored. However without back-up systems, the information is lost after a week. Of course it is possible to keep such log files using a weekly back-up system which keeps a copy of the log file in the back-up storage. This may reduce the size of log file storage on the server or communication equipment if the back-up is kept externally to those systems, but also increases the access time significantly. If log file information from a previous week is needed, it has to be restored from the back-up first, which takes some time and thus increases access time to older log files.

The time required to access log file information can be crucial in certain applications, for instance where access logs are used to make audits of system security or usage at irregular time intervals. By having the log files available at all times, such audits can occur whenever a person desires to perform the audit or is instructed to do so. As long as a log file is stored on the system which created the log file or a specific log file storage system, the access to the log files can be considered as on-demand. However when log file information is moved to off-line storage or back-up files, the access is no longer on-demand. It takes time to restore the log files to a system where they can be accessed which can be a drawback for situations which require on-demand log file access.

The drawbacks of the existing log file management systems can be summarized as following. Manual log file management is prone to errors and cumbersome for a human being, especially in a scenario where a large number of log files has to be managed. Automated systems generally bring the all-or-nothing concept into log file management which means that information is either available or removed. Removed information may be permanently lost or may be kept in off-line storage or back-ups which means that additional effort is required for accessing such log files which increases the access time to log files.

It is an objective of the present invention to provide a method for managing log files which is able to reduce the storage requirements for log files over time. It is another objective of the present invention to maintain a low access time to important information in log files.

### Summary of the Invention

The drawbacks of the prior art solutions are overcome and the objectives of the present invention are realized by a method for managing a log file comprising the use of at least one marker in the log file, the marker being a criterion for the retention of a log file entry or of a part of the log file entry.

Optionally the method for managing a log file according to the present invention wherein the log file comprises one or more markers and the method further comprising the step of detecting the markers and the step of processing the log file entry or the part of the log file entry based on the markers.

Optionally in the method for managing a log file according to the present invention the processing is one or more of the following:
- removing the log file entry or the part of the log file entry from the log file; and
- moving the log file entry or the part of the log file entry from the log file to a different log file.

Indeed, by using markers into log files which are a criterion for the retention of information in a log file and removing or processing information based on these markers, it is possible to selectively process or remove information from a log file and keep other information available. A marker indicates whether a particular piece of information in a log file, such as an entire log file entry or one or more parts of a log file entry should be retained or not during log file clean-up procedures. The advantage is that certain information in the log file or in the entries can be kept for a longer period of time while less relevant information can be removed to reduce the storage requirements for a log file or can be moved to a different storage location where storage requirements are of no issue such as off-line storage.

The markers can be of the basic retain, delete or move type, which indicates whether a log file entry or parts thereof should be kept, moved or can be removed during the log file ctean-up. However it is more advantageous to create multiple levels of retention for information in log files. This allows the reduction of log file sizes over time based on the importance of information. For instance in an access log there may be three levels of retention, where the first level is used for a timestamp and an indication of which access was requested, the second level can be used for an indication of the person requesting access and the third level can be used to indicate why access was granted or refused. The initial log file contains an entry with these three parts of information and their respective markers. At a first point in time, the third level can be removed first which reduces the log file size a bit. At a second point in time the second level can be removed whereas the first level is kept at all times. This way the size of the log file is reduced over time when compared to the initial log file size but information remains available until the log file is removed completely or until the first level is removed as well. Of course this also means that certain information is no longer available. For instance at the first point in time, the log file only provides information on who requested access and when access was request but no longer to why access was granted or rejected. At the second point in time there is only information related to when access was requested in the log file but no longer any information indicating who or why. In addition to multiple levels of retain and remove markers, some markers may also indicate that movement of information is desired. In the example given above this could mean that the second level marker indicates that the information is to be moved to a different storage point rather than be removed from the log file completely.

The advantage is thus that important information can be kept in the log file for a long time whereas information of lesser importance can be removed from the log file over time. Because the log files decrease in size, they can be kept at their initial location for a longer period of time which increases the access time as no retrieval from off-line storage or backups is required. Removed information can either be removed permanently or can be moved to a different file, which reduces the log file but does not remove the information permanently.

Optionally the method for managing log files according to the present invention further comprises the step of inserting markers into the log files.

In certain situations log files may consist of fields with a name and a value. For instance an access log may have a field with the name "timestamp" and as value a time and date of access attempts, a field with the name "source" and as value an identification of who requested access, a field with the name "destination" and as value an identification of what was accessed, etc. Each log file entry may then comprise all of these fields with a certain value defined for each occurrence of an access request. The field names may be present in the entries in full length or as an abbreviation. In general the field names can be linked to a particular retention level which is used to remove information from the log files. For instance the timestamp and source may have a higher retention level than the destination. This way timestamp and source information can be stored for a longer period of time than the destination information.

However it may also be possible to insert specific markers in a log file which indicate the retention level of information. In the above given example of fields, the log file may be extended with an additional marker such as an alphanumerical representation of the retention level which is then used as a criterion for removing or retaining information in the log file. Such explicit markers have the advantage that there is no need for field names to be present in the log file and that a generic log management system can be used to clean up log files of various sources.

Using the field names as markers requires a clean-up system or application which is designed to recognise those specific markers and their value. This means that each application which generates log files requires an application-specific clean-up system that is able to recognize markers related to the application. A generic system has the advantage that it can be designed and implemented once and does not need to be adapted when new applications which produce log files are added. However, a generic system requires that each produced log file contains the markers. A choice between both systems can therefore depend on elements such as the amount of third party applications being used in a system which generates log files. For instance if a service provider depends mainly on applications created by himself, he can easily define how log files are created. On the other hand, if the provider depends mainly on third party applications, it is much more difficult to alter the generated log files to include markers.

Optionally in the method for managing a log file according to the present invention, the step of processing the log file entry or the part of the log file entry is executed at a predefined point in time or at a time interval.

Planning the execution of a log file clean-up which can involve the processing of log files, entries in log files and parts of entries in log files can be advantageous to achieve a continuous management of the log files. For instance a system may perform log file management every day at a specific hour to reduce the log file size from the previous day.

In addition to predefined points in time whereon general log file management of clean-up is performed, the markers may also reflect when particular information in the log file may be removed or processed. The markers may represent such information explicitly as a time and date representation or may represent such information relative to other time information. For instance a particular marker can be defined as indicating that information may be removed from the log file a day, a week, a month or a year after it was added to the log file. Of course other time periods can also be specified such as a number of days, weeks, months or years or even time periods shorter than a day such as in hours, minutes or seconds.

Thus, processing log files or performing a log file clean-up may be executed manually, for instance by a system administrator who executes a clean-up application or script or automatically by a platform. The platform may be aware of when a particular marker is to be processed or the marker may provide such information to the system. In one scenario, each marker has a specific meaning which is used across an entire service platform, piece of communication equipment, etc. Thus each marker has the same meaning regardless of the type of log file wherein it is used. Alternatively, markers can have a specific meaning within a particular log file. The system may be predefined with awareness of the meaning of each marker in a log file or the system may be able to consult configuration files which detail how each marker should be interpreted as a retention marker in a specific log file or across the entire system.

Optionally in the method for managing a log file according to the present invention, the step of processing the log file entry or the part of the log file entry is adapted to process the log file entry or the part of the log file entry based on the markers being above or below a threshold value.

The markers are a criterion for the retention of information in a log file such as entries or parts of entries. A system operator or administrator may be able to define the importance of markers by setting thresholds which define whether a marker and the information whereto the marker relates should be processed or not. For instance when letters of the alphabet are used as markers, the threshold could be that any entry or part of an entry with a marker which is placed before the threshold letter in the alphabet is removed or processed. Similarly the threshold could be a numerical value which has to be above or below a specific value or could even be a timestamp which indicates that any marker older than the timestamp can be removed or processed.

Such thresholds may be defined in general thus being applied to every log file in a system or may be defined for each log file individually. Alternatively the thresholds may be defined for each type of log files. For instance a first set of thresholds may be applied for access logs and a second set of thresholds may be applied for event logs. This allows an operator to define which information should be retained or processed in a more fine-grained way than one general definition of thresholds for an entire system. This may also enable a more signification reduction of heavy log files than for light log files. For instance detailed event logs may be processed more often or have lower thresholds than non-detailed access logs.

Optionally in the method for managing log files according to the present invention, the step of processing the log file entry or the part of the log file entry is adapted to retain the markers in the log file and to process the information linked to the markers in the log file entry or the part of the log file entry.

By retaining the markers in a log file while removing the information whereto the marker relates, it is possible to determine which information was present in the log file before processing. For instance, in an access log a first marker may be used to indicate that a timestamp and an identification of a user has to be retained and a second marker may be used to indicate that detailed information such as why access was rejected or granted can be removed after 1 month. By retaining the second marker in the log file and removing the detailed information itself, the log file is reduced in size but it remains possible to determine that the detailed information was present in the log file.

This feature in combination with moving parts of log files to a different storage location during processing can be valuable when analyzing log files at a later time. For instance when investigating an attack on a server, current log files may indicate that a particular access attempt has occurred at a given time and that information concerning the source of the access attempt was available in the log file. This knowledge can then be used to retrieve the log file from the different storage location in order to find out the details of the log file entry that were moved.

The present invention further relates to a system for managing a log file, the log file comprising at least one marker being a criterion for the retention of a log file entry or a part of the log file entry, the system comprising means for processing the log file entry or the part of the log file entry based on the markers.

### Brief Description of the Drawings

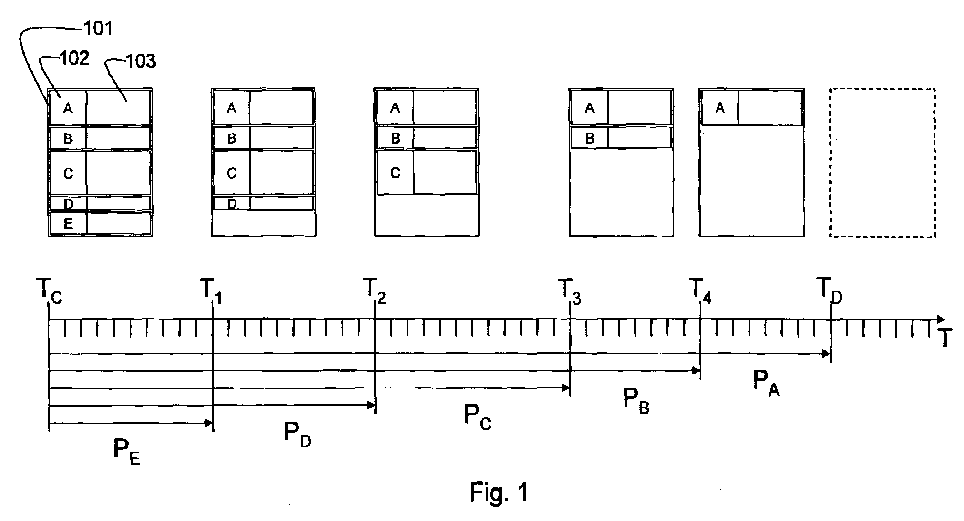

Fig. 1 illustrates a schematic overview of a log file entry over time according to an embodiment of the present invention.

### Detailed Description of Embodiment(s)

Fig. 1 shows a single log file entry 101 which consists of 5 parts or elements indicated by reference 103. Each of the elements has an associated retention marker indicated by reference 102. In this particular example, the log file entry 101 concerns an access log file entry which contains a timestamp with retention level A, a source of the access request with retention level B, the service to which access was requested with a retention level C, an indication of whether access was granted or not with retention level D and a reason why access was granted or refused with retention level E.

Fig. 1 illustrates how the log file entry 101 evolves over time as a log file clean-up function is executed on the log file which contains log file entry 101. Each point in time T1 - T2 between TC and TD indicated an occurrence of the clean-up function. During the clean-up the log file is processed and log file entries or parts of log file entries (also called elements of the log file) are for instance removed from the log file entry or moved into a different log file such as in an offline storage space or a back-up system.

At time T_{C} the log file entry 101 is created and a value is defined for each of the elements or parts of the log file entry along with their retention level A - E. The retention level can be defined on individual basis for each log file entry, i.e. in one entry the timestamp may have retention level A and in another entry the timestamp may have retention level C or can be globally defined for each entry in this access log.

The entire log file entry 101 is retained in the log file for a period P_{E} until time T₁. The period P_{E} can be specified or time T₁ can be specified for the log file clean-up function, i.e. the clean-up function can be executed at T₁ or can be executed after the period P_{E} has passed since T_{C}. P_{E} can be considered the period wherein information with retention level E is retained in the log file. After P_{E}, this information is removed by the clean-up function, either deleted permanently or moved to a different log file or location. Similarly T₂ can be defined as the point in time whereon the clean-up function removes information with retention level D. T₂ falls a period P_{D} after T_{C} but can alternatively be specified as a period of time after T₁. Time T₃ is the time at which log file entry elements with retention level C are removed from the log file or are moved and T₃ is a period P_{C} after the time of creation T_{C}. Likewise time T₄ which is a period P_{B} after T_{C} is the time at which the elements with retention level B are processed and removed or moved. Finally at T_{D} which is a period P_{A} after T_{C}, the last elements with retention level A are removed. At T_{D}, the log file entry 101 is removed from the log file or all information from entry 101 is moved to a different storage location or file. While performing the clean-up function, markers can be maintained or removed from the log file. For instance at T1 when information with retention level E is removed from a log file, the marker indicating retention level E may remain present in the log file or may be removed together with the information.

The periods PA to PE can all be of equal length or can be of different length. For instance the most detailed information such as information with retention levels D and E may be removed relatively quickly after creation, whereas the most important information such as retention levels A and B can be kept for a much longer period of time. Alternatively to time, the retention levels may be linked to the actual file size of the log file. For instance if the file size exceeds a first threshold, all elements of entries with retention level E may be removed from the log file and if that does not suffice to obtain a file size below the threshold, elements with retention level D may be removed, etc.

It should be noted that the complete access log will typically comprise a number of entries 101 which are similar in their elements and retention levels but which have different values for one or more elements. For instance, if the same person attempts to access the same service with the same access rights at multiple times, there can be a number of log file entries 101 which only differ from each other in timestamp. Similarly if different people with different access rights try to access a service at the same time, there may be multiple log file entries with the same timestamp value but with different source values, access granted or refused indications and reasons for granting or refusing access. Only a single example is given here with the above described details and it is obvious to those skilled in the art that log file entries may consist of more or less elements than illustrated here and that other information may be stored in the log file entries. For instance each entry may only consist of three elements which are not related to access but to execution of functions in a software program and errors caused by particular functions.

It should also be noted that although this particular example illustrates the use of an explicit retention level marker in the log file entry based on alphanumeric characters, it is also possible to use field names in the log file as markers. For instance, a timestamp may be represented as *TS=ddmmyyyyhhmmss* having two digits for the day (*dd*), two digits for the month *(mm),* four digits for the year (*yyyy*), two digits for the hour (*hh*), two digits for the minutes (*mm*) and two digits for the seconds (*ss*). The indication TS can then be used as marker with a meaning similar to an explicit marker A as used in the above given example. Similarly the indication whether access was granted or refused could be represented as *Access=yes* or *Access=no* where *yes* or no reflect whether access was granted or not and where Access can be used as marker for the retention level.

Having explicit markers adds a small amount of data to the log file and thus increases the log file size by a small amount. However because the log file can be reduced in size over time, this small additional amount of information will not appreciably increase the storage requirements of log files when using an embodiment of the present invention.
In addition, when explicit markers are used and markers are represented by a single letter or number, it may become possible to omit a field name from the log file entries. Thus in the above given example, *TS=ddmmyyyyhhmmss* may be replaced by *A=ddmmyyyyhhmmss* or *Access=yes* or Access=no may be replaced with *D=yes* or *D=no.* Of course a single letter marker is only an example, abbreviations of the actual field may also be used or markers consisting of multiple characters and/or digits can also be used.

The markers can be a single letter, symbol, ASCII character or set of alphanumeric or ASCII characters which denote that anything following the marker has a particular retention level defined by the marker. Alternatively the marker can be in a tag-format with an opening tag indicating the start of a particular retention level and a closing tag indicating the end of the retention level. Such tags may be formatted similar to extensible Markup Language (XML) tags or HyperText Markup Language (HTML) tags or a different format using different brackets or start and end of tag indicators. The marker may be used to indicate that start and/or end of a retention level or may also specify additional information. For instance markers in XML-tag style may specify attributes which are relevant to the processing of the information between the markers during log-file clean-up such as a period of time after which the marker can be processed.

Using markers which have no meaning within the log file itself or which cannot occur as a value of a field or element of a log file entry, is advantageous because it avoids incorrect detection of markers when processing a log file or incorrect information in the log file. For instance if the log file only contains numeric data, the use of alphabetic markers ensures that no marker is mistakenly interpreted as data or vice versa. Similarly when using numeric markers, it can be beneficial to use numeric markers which cannot resemble actual data in the log file.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A method for managing a log file comprising the use of at least one marker in said log file, said marker being a criterion for the retention of a log file entry or of a part of said log file entry.

2. The method for managing a log file as defined in claim 1, wherein said log file comprises one or more markers as defined in claim 1. said method further comprising the step of detecting said markers and the step of processing said log file entry or said part of said log file entry based on said markers.

3. The method for managing a log file as defined in claim 1 wherein said method further comprises the step of inserting said marker into said log file.

4. The method for managing a log file as defined in claim 2, wherein said processing is one or more of the following:
- removing said log file entry or said part of said log file entry from said log file; and
- moving said log file entry or said part of said log file entry from said log file to a different log file.

5. The method for managing a log file as defined in claim 2 wherein said step of processing said log file entry or said part of said log file entry is executed at a predefined point in time or at a time interval.

6. The method for managing a log file as defined in claim 2 wherein the step of processing said log file entry or said part of said log file entry is adapted to process said log file entry or said part of said log file entry based on said markers being above or below a threshold value.

7. The method for managing a log file as defined in claim 2 wherein the step of processing said log file entry or said part of said log file entry is adapted to retain said markers in said log file and to process the information linked to said markers in said log file entry or said part of said log file entry.

8. A system for managing a log file, said log file comprising at least one marker being a criterion for the retention of a log file entry or a part of said log file entry, said system comprising means for processing said log file entry or said part of said log file entry based on said markers.

## Amended claims

### Amended claims in accordance with Rule 137(2) EPC.

**1.** A method for managing a log file comprising the use of a criterion for the retention of a log file entry (101) or of a part (103) of said log file entry(101),
**characterized in that** said method comprises the use of markers (102) in said log file, said markers (102) being said criterion.

**2.** The method for managing a log file as defined in claim 1,
**characterized in that** said method further comprises the step of detecting said markers (102) and the step of processing said log file entry (101) or said part (103) of said log file entry (101) based on said markers (102).

**3.** The method for managing a log file as defined in claim 1 wherein said method further comprises the step of inserting said marker (102) into said log file.

**4.** The method for managing a log file as defined in claim 2,
**characterized in that** said processing is one or more of the following:
- removing said log file entry (101) or said part (103) of said log file entry from said log file (101); and
- moving said log file entry (101) or said part (103) of said log file entry (101) from said log file to a different log file.

**5.** The method for managing a log file as defined in claim 2,
**characterized in that** said step of processing said log file entry (101) or said part (103) of said log file entry (101) is executed at a predefined point in time or at a time interval.

**6.** The method for managing a log file as defined in claim 2,
**characterized in that** said step of processing said log file entry (101) or said part (103) of said log file entry (101) is adapted to process said log file entry (101) or said part (103) of said log file entry (101) based on said markers (102) being above or below a threshold value.

**7.** The method for managing a log file as defined in claim 2,
**characterized in that** said step of processing said log file entry (101) or said part (102) of said log file entry (101) is adapted to retain said markers (102) in said log file and to process the information linked to said markers (102) in said log file entry (101) or said part (103) of said log file entry (101).

**8.** A system for managing a log file,
**characterized in that** said log file comprises at least one marker (102) being a criterion for the retention of a log file entry (101) or a part (103) of said log file entry (101) and said system comprises means for processing said log file entry (101) or said part (103) of said log file entry (101) based on said markers (102).
